# EUROPEAN PATENT APPLICATION

(11) **EP 1 773 025 A1**
(43) Date of publication of application: **11.04.2007**
(21) Application number: 05027782.1
(22) Date of filing: 19.12.2005
(51) Int. Cl.: H04L 29/12, H04L 12/24

(54) **Method for accessing and configuring a network appliance**

(30) Priority: 04.10.2005 US 163059
(71) Applicant: Zyxel Communications Corporation, Hsien Hsin chu (TW)
(72) Inventor: Chen, Wei-Che, HsinChu (TW); Kuo, Chih-Fen, Zhongshan District Taipei City (TW); Tsai, Chen-Chia, Sanmin District Kao-Hsiung City (TW); Chen, Chia-Yuan, HsinChu (TW)
(74) Representative: Schaeberle, Steffen

(57) **Abstract**

A method for managing a network appliance (22, 22') includes establishing a management Internet protocol (IP) address for the network appliance (22, 22'), receiving a domain name service (DNS) query from a local computer (20) at the network appliance (22, 22') containing a predetermined domain name corresponded to the management IP address, sending the management IP address to the local computer (20) subsequent to receiving the DNS query containing the predetermined domain name, and receiving a connection from the local computer (20) at the network appliance (22, 22') using the management IP address for managing the network appliance (22, 22').

## Description

The present invention relates to a method for managing a network appliance and a transparent configurable network appliance according to the pre-characterizing clauses of claims 1 and 6.

Most portable bridge devices (a type of network appliance) allow configuration, such as configuration of services (firewall, IPSec VPN, etc.), through a pre-configured management Internet protocol (IP) address. A user of a portable notebook computer must first assign the special management IP address to the bridge device so that they can subsequently access the bridge device through such IP address. However, assignment of IP addresses is a highly technical undertaking, that is beyond the skill of most computer users. In addition, since a notebook computer can be used in different network environments, a user may have to assign a management IP address to a bridge device each time the user takes the notebook computer and bridge device to a new environment. This is because different network environments may have different assignments of IP addresses (e.g. a previously selected management IP address may already be used by a proxy or gateway in the new environment). Thus, to prevent conflict in different network environments, a portable bridge device must frequently be assigned new management IP addresses. This causes inconvenience to the user and may cause non-technical users to forego use of a portable bridge device and its benefits altogether.

This in mind, the present invention aims at providing a method for managing a network appliance and a configurable network appliance that offer simplified, transparent operation.

This is achieved by a method for managing a network appliance according to claim 1 and a transparent configurable network appliance according to claim 6. The dependent claims pertain to corresponding further developments and improvements.

As will be seen more clearly from the detailed description following below, the claimed method for managing a network appliance includes establishing the management Internet protocol (IP) address for the network appliance; receiving a domain name service (DNS) query from the local computer at the network appliance, the DNS query containing a predetermined domain name corresponded to the management IP address; and with the network appliance, sending the management IP address to the local computer subsequent to receiving the DNS query containing the predetermined domain name. The claimed transparent configurable network appliance includes a DNS intercept module coupled to an IP address module and to first and second ports, the DNS intercept module programmed to inspect DNS packets and send a management IP address to the first port upon detection of a specific DNS packet; wherein a local computer connects to an upper layer service through the IP address module using the management IP address.

In the following, the invention is further illustrated by way of example, taking reference to the accompanying drawings. Thereof
Fig. 1 shows a simple network topology according to the prior art,
Fig. 2 shows a simple network topology according to the invention,
Figs. 3-5 show a network appliance and its operation according the a first embodiment of the invention, and
Figs. 6-8 show a network appliance and its operation according the a second embodiment of the invention.

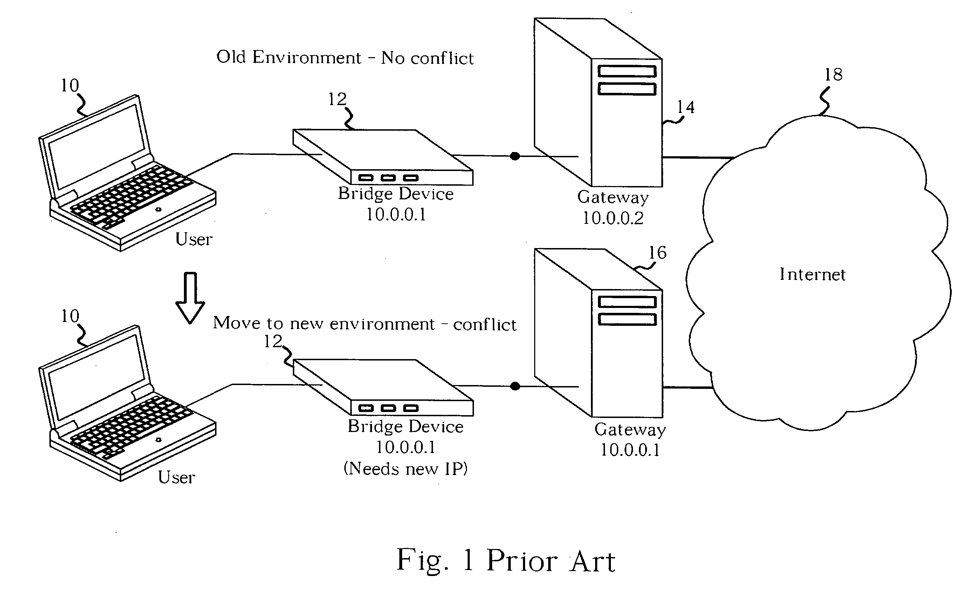

Please refer to Fig. 1, which shows a simple network topology. A notebook computer 10 connects to a network 18 through a gateway 14 and a portable network appliance 12, which can provide services such as a firewall, Internet Protocol Security for Virtual Private Networks (IPSec VPN), anti-virus, and an Intrusion Detection and Prevention (IDP) system. The notebook computer 10 and the network appliance 12 are portable can be moved by the user between different network environments. When simplified configuration is desired, the network appliance 12 is usually selected as a bridge device, which can provide the aforementioned services with plug-and-play usability.

A user of the notebook computer 10 must first assign the special management IP address (e.g. "10.0.0.1") to the bridge device so that they can subsequently access the bridge device through such IP address. However, assignment of IP addresses is a highly technical undertaking, that is beyond the skill of most computer users. In addition, since the notebook computer 10 can be used in different network environments, the user should assign a management IP address to the bridge device each time the user takes the notebook computer 10 and bridge device to a new environment. This is because different network environments may have different assignments of IP addresses (e.g. "10.0.0.1" may already be used by a proxy or gateway in the new environment). Thus, to prevent conflict in different network environments (e.g. in Fig. 1, the new gateway 16 already uses "10.0.0.1"), the bridge device must frequently be assigned new management IP addresses. This is inconvenient for users, who may thus choose to forego use of the bridge device and its benefits altogether.

The above are merely examples of the problems with assigning management IP addresses to portable network appliances such as bridge devices. There are many other situations where problems can occur.

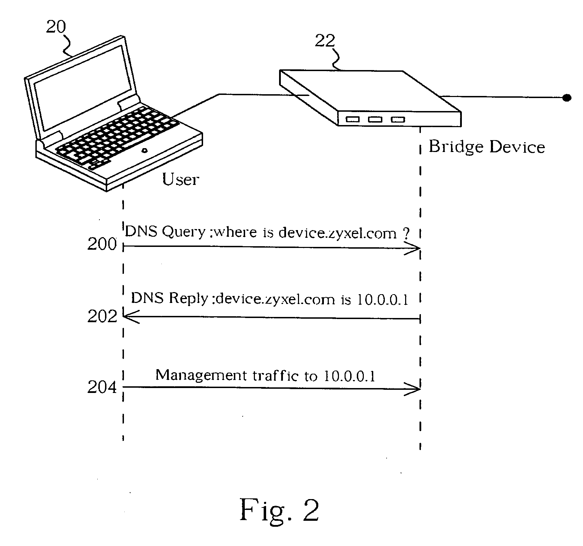

Fig. 2 illustrates a "zero-configuration" network appliance 22 according to the invention. The network appliance 22, which can be a bridge device, is connected to a user's portable computer (local computer) 20. All traffic between the computer 20 and an external network (e.g. the Internet or a wide area network - WAN) passes through the bridge device 22. Both the computer 20 and bridge device 22 are portable so that the user can enjoy mobile computing capability along with the security afforded by the bridge device 22.

In the invention, for the computer 20 to receive a management IP address for communicating with the bridge device 22 such that the user can configure the bridge device 22 (e.g. configure the firewall, turn on virus checking, etc.), the following procedure is performed. First, in step 200, the user enters a domain name, such as the fully qualified domain name (FQDN) "device.zyxel.com" into the computer 20. This can be achieved by the user typing the domain name into the address field of a Web browser, by the user clicking on a shortcut icon, or by the user activating a Web site bookmark, for example. Essentially, the user directs a Web-capable program (e.g. Web browser or specialized program) to "device.zyxel.com". Step 200 generally comprises a domain name service (DNS) query, which can be understood as the computer asking the external network where the resource "device.zyxel.com" is located. Subsequently, in step 202, the bridge device 22 responds to the computer that "device.zyxel.com" is at IP address "10.0.0.1" (note that "device.zyxel.com" and "10.0.0.1" are only examples). Lastly, in step 204, the computer 20 now recognizes that management traffic for the bridge device 22 should be directed to IP address "10.0.0.1", since it is IP addresses than facilitate data communication rather than domain names. Thus, when the user wants to configure the bridge device 22, he or she need only indicate such a predetermined domain name in order to point a Web browser or special configuration program to the correct management IP address. One advantage of this is that the domain name (e.g. "device.zyxel.com") can be selected as easy for the user to remember.

The above is an overview of the invention. There are two embodiments that are detailed presently, a major difference between the embodiments being how the bridge device 22 establishes the management IP address and how the bridge device 22 responds to DNS queries of the computer 20 and DNS replies of a DNS server. The two embodiments mainly concern steps 200 and 202 in the above procedure. In the first embodiment, the bridge device 22 intercepts and inspects DNS query packets sent from the computer 20 and replies to the computer 20 with a self-generated "fake" or pseudo DNS reply when detecting a DNS query containing the predetermined domain name. Other DNS queries are forwarded a DNS server as normal. In the second embodiment, the bridge device 22 forwards every DNS query packet from the first computer 20 to a DNS server, which responds to the bridge device 22 with a DNS reply containing a IP address as the management IP address. The bridge device 22 then configures itself to accept management at that IP address and forwards the DNS reply to the computer 20. Both embodiments are similar in that the bridge device 22 monitors or inspects DNS traffic.

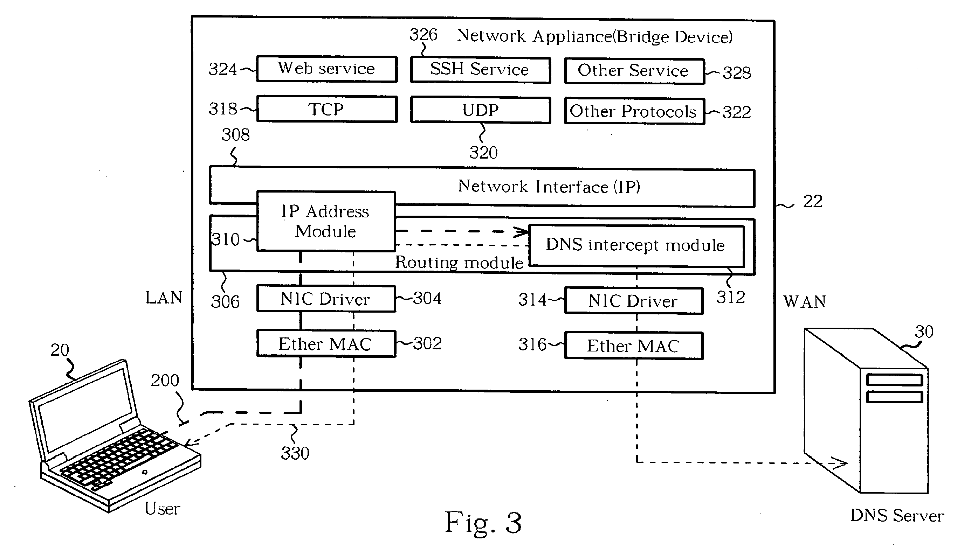

For a description of the first embodiment, please refer to Fig. 3. The network appliance (bridge device) 22 includes a first Ethernet media access control (MAC) unit 302, a first network interface card (NIC) driver 304, a routing module 306, a network interface 308, an IP address module 310, a DNS intercept module 312, a second NIC driver 314, and a second Ethernet MAC unit 316. The first Ethernet MAC unit 302 and/or the first NIC driver 304 can be referred to as a first port for connecting to the local computer 20. The second Ethernet MAC unit 316 and/or the second NIC driver 314 can be referred to as a second port for connecting to an external network (e.g. Internet or WAN) that includes a DNS server 30. The bridge device 22 further comprises a transmission control protocol (TCP) unit 318, a user datagram protocol (UDP) unit 320, and other protocols 322. Further provided are an upper layer service (e.g. Web service) 324 allowing configuration of the bridge device 22, a secure socket shell (SSH) service 326, and other services 328. The interconnections of the above-described components are as shown in Fig. 3, however, these are mainly exemplary. All components of the bridge device 22 that are not described herein operate in their well-known manner. Moreover, any or all components can be hardware, software, firmware, or any combination of such.

Fig. 3 illustrates the path of the DNS query 200 of Fig. 2 (heavy dashed line) and the path of general DNS queries and replies 330 (light dashed line). DNS queries are packets or other structured data that originate from the computer 20 when the user enters a domain name, as mentioned above. When a DNS query reaches the DNS intercept module 312, the DNS intercept module 312 inspects the query for a predetermined domain name (e.g. "device.zyxel.com"). If the DNS query is not concerning the predetermined domain name, then the DNS intercept module 312 forwards the DNS query to the DNS server 30 as usual. DNS queries like this, which follow the path 330, are handled as in the prior art: the DNS server responds to the computer 20 via the bridge device 22 with the public IP address corresponding to the domain name. The DNS query of the predetermined domain name is handled differently.

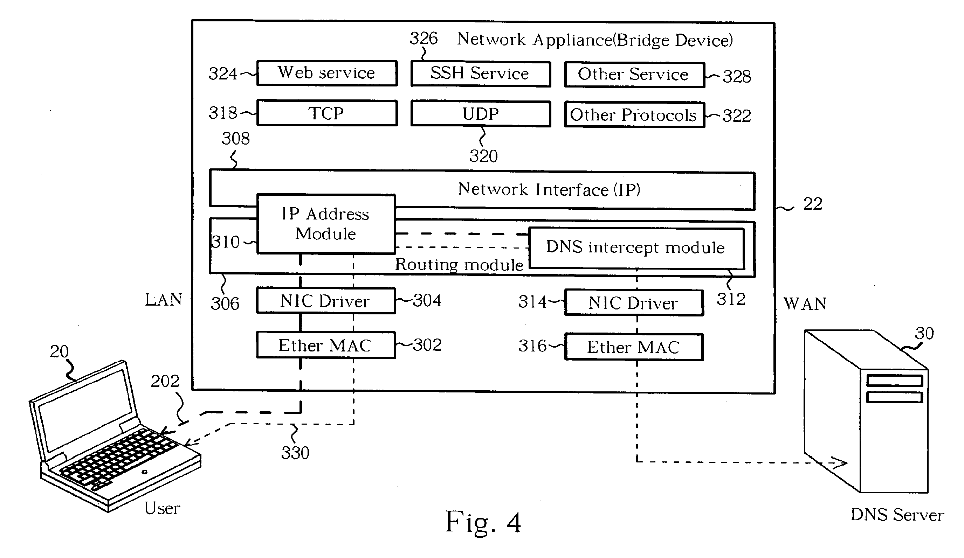

When the DNS intercept module 312 detects the predetermined domain name in an inspected DNS query packet, the DNS intercept module 312 does two things. First, the DNS intercept module 312 replies to the computer 20 with a generated "fake" or pseudo DNS reply, and second, the DNS intercept module 312 does not forward the DNS query to the DNS server (not forwarding the DNS query to the DNS server is optional; the resulting DNS reply can be ignored instead). The pseudo DNS reply can be of the same form as a proper DNS reply from a DNS server, however, pseudo DNS reply must contain the management IP address. Thus, from the point of view of the computer 20, the DNS query has resulted in a proper DNS reply; the computer does not and cannot detect that the DNS reply is not from a DNS server. The result is that the computer obtains the management IP address (e.g. "10.0.0.1") for the bridge device 22. This step is illustrated in Fig. 4, in which the path of the DNS reply 202 of Fig. 2 is shown.

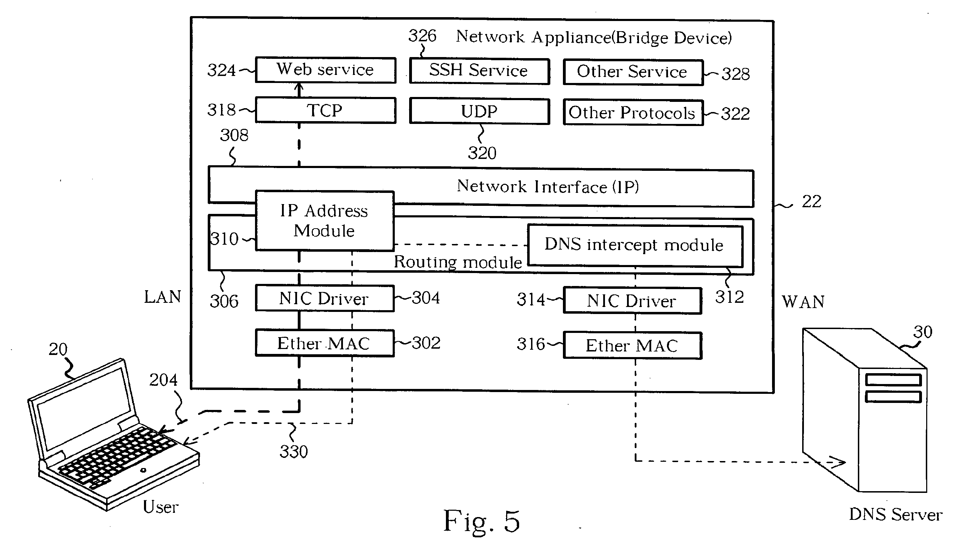

When the user wishes to manage the bridge device 22, the computer 20 then connects to the Web service 324 of the bridge device using the obtained management IP address (e.g. "10.0.0.1 "). The facilitate this, the IP address module 310 routes all traffic having the management IP address to the Web service 324. This is shown in Fig. 5, in which the path of management traffic 204 of Fig. 2 is shown.

There are several considerations for the first embodiment. The management IP address is a virtual address that is configured in the network appliance (bridge device 22). Whether the management IP address is preprogrammed into the network appliance or assigned on the fly is irrelevant. The essential characteristics are that the DNS intercept module 312 intercepts DNS queries containing the predetermined domain name and replies with the pseudo DNS reply containing the management IP address, and that the IP address module 310 routes traffic from the computer 20 for the management IP address to the Web service 324. The predetermined domain name should be stored where the DNS module can easily access it, and the management IP address should be stored where the DNS module and the IP address module can both easily access that value. In addition, the DNS intercept module should inspect every DNS query packet for the predetermined domain name, or intelligently skip inspection of only those DNS query packets that would not contain the predetermined domain name. Lastly, it is worth repeating that the DNS intercept module 312 does not interfere with normal DNS traffic.

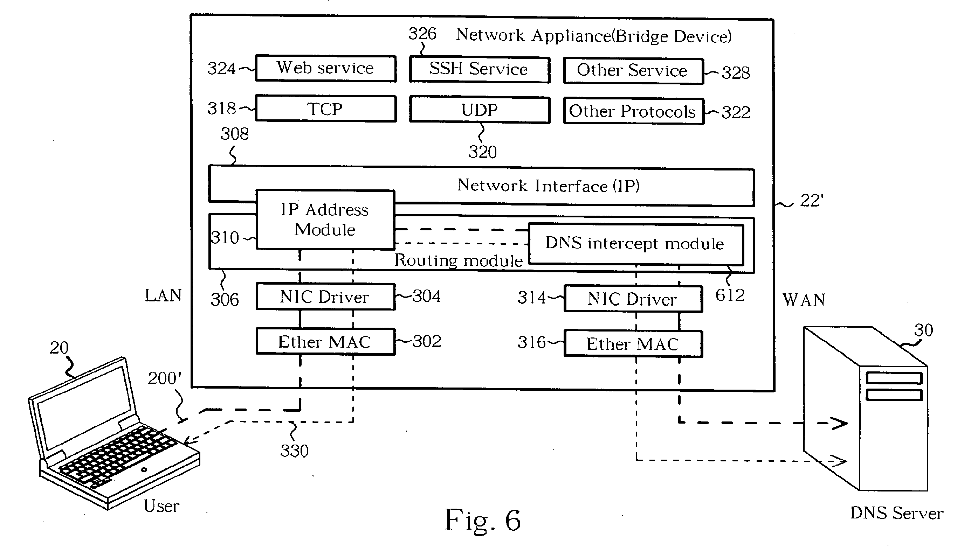

For a description of the second embodiment, please refer to Fig. 6. A network appliance (bridge device) 22' contains many of the same components as in the first embodiment, with like components having like reference numerals. One major difference of the second embodiment is the inclusion of a DNS intercept module 612 in place of the DNS intercept module 312. Just as in the first embodiment, all components of the bridge device 22' that are not described herein operate in their well-known manner, and any or all components can be hardware, software, firmware, or any combination of such.

In addition to showing the path of general DNS queries and replies 330 (light dashed line), Fig. 6 illustrates the path of the DNS query 200 of Fig. 2 according to the second embodiment, the path being labeled as 200' (heavy dashed line). The DNS query 200 is forwarded through the bridge device 22' and specifically through the DNS intercept module 612 without action. The DNS server 30 is thus able to reply to all DNS queries in the same manner: by sending a DNS reply to the computer 20 through the bridge device 22'. Therefore, in response to the DNS query 200 containing the predetermined domain name, the DNS server replies with the management IP address. This requires the management IP address to be registered with or available to the DNS server, which will most likely mean that the management IP address is registered publicly, such that any computer connected to the Internet could perform such a DNS query. However, a private IP address can also be used in the second embodiment, the public IP address being merely an example.

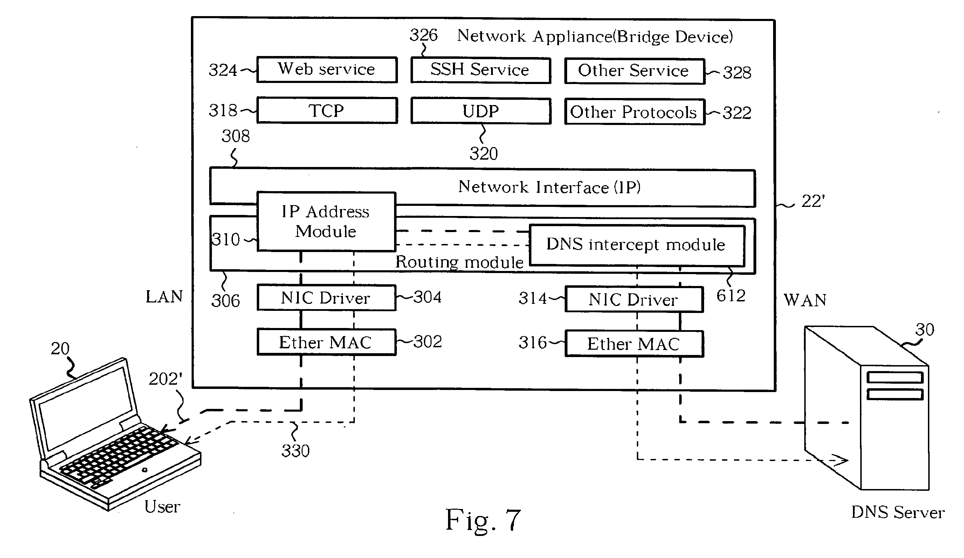

In contrast with the first embodiment, the DNS intercept module 612 inspects DNS reply packets for a response to the DNS query 200 containing the predetermined domain name. What this means is that the DNS intercept module 612 intercepts DNS reply packets coming from the DNS server 30, and searches for an IP address (e.g. "210.138.13.30") corresponding to a response to the DNS query 200 containing the predetermined domain name (e.g. "device.zyxel.com"), as shown in Fig. 7. The DNS reply path 202' corresponding to the step 202 of Fig. 2 is shown in Fig. 7.

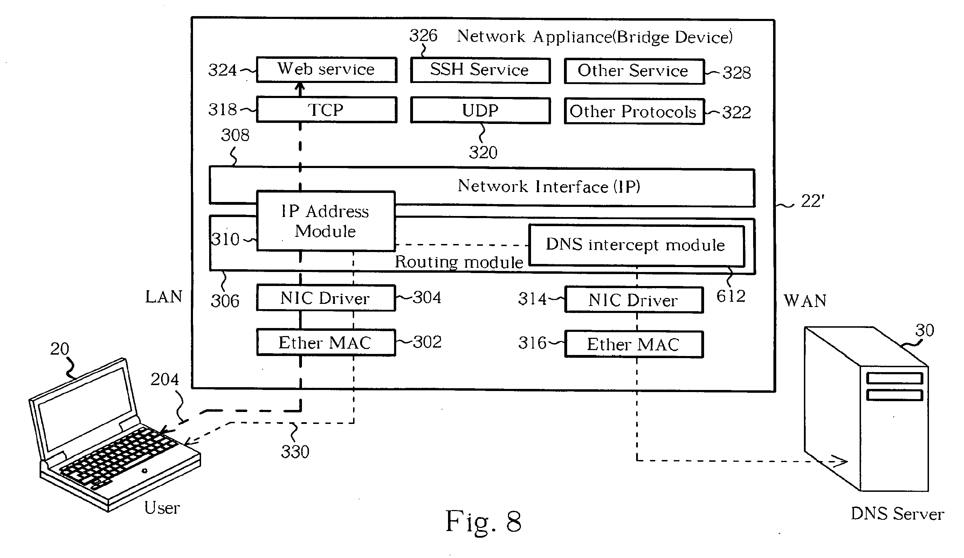

As in the first embodiment, when the user wishes to manage the bridge device 22', the computer 20 then connects to the Web service 324 of the bridge device using the obtained management IP address (e.g. "210.138.13.30"). The IP address module 310 routes all traffic having the management IP address to the Web service 324, as shown in Fig. 8, in which the path of management traffic 204 of Fig. 2 is shown.

Regarding considerations for the second embodiment, the management IP address is, for example, a public address that should be configurable within the network appliance (bridge device 22'). The management IP address is programmed into the network appliance when the DNS intercept module 612 intercepts and obtains the management IP address. The essential characteristics are that the DNS intercept module 612 inspects DNS replies for reference to the predetermined domain name, sets the management IP address within itself when found, and forwards the DNS reply containing the management IP address to the computer 20 which also needs to be aware of the management IP address. As in the first embodiment, the IP address module 310 routes traffic from the computer 20 for the management IP address to the Web service 324. The predetermined domain name should be stored where the DNS module can easily access it, and the management IP address should be stored where the DNS module and the IP address module can both easily access that value. In addition, the DNS intercept module should inspect every DNS reply packet for reference to the predetermined domain name, or intelligently skip inspection of only those DNS reply packets that would not contain reference to the predetermined domain name. Again, as in the first embodiment, the DNS intercept module 612 does not interfere with normal DNS traffic.

Business travelers or other portable computer users may like to bring a simple network appliance (such as a bridge device) with them to protect their computers from variable attacks. The above-described invention provides a network appliance having reduced configuration effort. The invention offers a very easy way to configure a network appliance without having to periodically manually change management IP addresses. By merely accessing a simple, easy-to-remember domain name, a user can access the network appliance no matter the network environment.

## Claims

1. A method for managing a network appliance (22, 22'), the method comprising:
receiving a connection from a local computer (20) at the network appliance (22, 22') using a management Internet protocol, IP, address for managing the network appliance (22, 22');
**characterised by**:
establishing the management IP address for the network appliance (22, 22');
receiving a domain name service, DNS, query from the local computer (20) at the network appliance (22, 22'), the DNS query containing a predetermined domain name corresponded to the management IP address; and
with the network appliance (22, 22'), sending the management IP address to the local computer (20) subsequent to receiving the DNS query containing the predetermined domain name.

2. The method of claim 1 further **characterised by** the network appliance (22) inspecting the DNS query for the predetermined domain name, wherein sending the management IP address to the local computer (20) is **characterised by** the network appliance generating and sending a DNS reply containing the management IP address to the local computer (20).

3. The method of claim 1 or 2, **characterised in that** the management IP address is preprogrammed in the network appliance (22, 22').

4. The method of claim 1 further **characterised by** forwarding the DNS query to a DNS server (30) and receiving a DNS reply in response, wherein establishing the management IP address is **characterised by:**
the network appliance (22') detecting the management IP address in the DNS reply; and
setting the management IP address in the network appliance (22').

5. The method of claim 4, **characterised in that** sending the management IP address to the local computer (20) comprises forwarding the DNS reply to the local computer (20).

6. A transparent configurable network appliance (22, 22') comprising:
a first port (302, 304) for connecting to a local computer (20);
an Internet protocol, IP, address module (310) coupled to the first port (302, 304);
an upper layer service (324) coupled to the IP address module (310), wherein the network appliance (22, 22') is capable of being configured by the local computer (20) with the upper layer service (324);
a second port (314, 316) for connecting to an external network; and
**characterised by:**
a domain name service, DNS, intercept module (312, 612) coupled to the IP address module (310) and to the first and second ports (302, 304, 314, 316), the DNS intercept module (312, 612) programmed to inspect DNS packets and send a management IP address to the first port (302, 304) upon detection of a specific DNS packet;
and by the local computer (20) connecting to the upper layer service (324) through the IP address module (310) using the management IP address.

7. The transparent configurable network appliance (22) of claim 6, **characterised in that** the DNS packets are DNS query packets received from the first port (302, 304), and the DNS intercept module (312) is programmed to send the management IP address as a generated DNS reply to the first port (302, 304) upon detection of a DNS query packet containing a predetermined domain name.

8. The transparent configurable network appliance of claim 6 or 7, **characterised in that** the management IP address is preprogrammed within the network appliance (22, 22').

9. The transparent configurable network appliance (22') of claim 6, **characterised in that** the DNS packets are DNS reply packets received from a DNS server (30) connected to the second port (314, 316), and the DNS intercept module (612) is programmed to inspect the DNS reply packets for the management IP address, set the management IP address in the network appliance (22'), and forward all DNS reply packets to the first port (302, 304).

10. The transparent configurable network appliance (22, 22') of claim 6, 7, 8, or 9 further **characterised by**:
a routing module (306), the DNS intercept module (312, 612) being located in the routing module (306);
a network interface (308), the IP address module (310) being located in the network interface (308) and the routing module (306); and
a transmission control protocol, TCP, unit (318) coupled between the upper layer service (324) and the IP address module (310);
wherein the first port (302, 304) comprises a first Ethernet media access control, MAC, unit (302) and a first network interface card, NIC, driver (304), and the second port (314, 316) comprises a second Ethernet MAC unit (316) and a second NIC driver (314).
